Europäisches Patentamt

European Patent Office

Office européen des brevets

(11) Veröffentlichungsnummer: **0 482 486 A2**

# EUROPÄISCHE PATENTANMELDUNG

(21) Anmeldenummer: **91117609.7**

(22) Anmeldetag: **16.10.91**

(51) Int. Cl.5: **B29C 67/14**

(30) Priorität: **20.10.90 DE 4033438**

(43) Veröffentlichungstag der Anmeldung:
**29.04.92 Patentblatt 92/18**

(84) Benannte Vertragsstaaten:
**AT CH DE ES FR GB IT LI NL SE**

(71) Anmelder: **Otto Sauer Achsenfabrik Keilberg**
**Hauptstrasse 26**
**W-8751 Bessenbach-Keilberg(DE)**

(72) Erfinder: **Fröhlke, Manfred, Dr.-Ing.**
**Nordfeldstrasse 10**
**W-6682 Ottweiler 5(DE)**

(74) Vertreter: **Vièl, Georg, Dipl.-Ing.**
**Patentanwalt Weinbergweg 15**
**W-6600 Saarbrücken(DE)**

(54) **Verfahren zur Herstellung von Blattfedern und Achslenkern aus faserverstärktem Kunststoff.**

(57) Die Erfindung bezieht sich auf ein Verfahren zur Herstellung von Blattfedern und Achslenkern aus faserverstärktem Kunstoff, wobei aus mit hitzehärtbaren Harzen imprägnierten, hochfesten Fasern, wie Glasfasern und/oder Kohlenstoffasern gefertigte Vorformlinge vorgesehen sind, in die gegebenfalls erforderliche Augen integriert sind.

Das Verfahren zeichnet sich vor allem dadurch aus, daß das Pressen und Aushärten des Preßkörpers getrennt voneinander durchgeführt wird. Der in eine auf ca. $T_0 = 90°$ C vorgewärmte Preßform eingelegte Vorformling wird unter einem Schließdruck von $P_1 = 20$ bis 50 bar auf eine Preßtemperatur von $T_1 = 90$ bis 120° Celsius erwärmt. Nach Erreichen der Preßtemperatur $T_1$ wird erst der volle Preßdruck $p_2$ aufgebracht, der während des nachfolgenden Aushärtevorganges bei einer Temperatur von $T_2 = 120$ bis 160° Celsius aufrechterhalten wird.

Die mit der Erfindung erzielten Vorteile bestehen insbesondere darin, daß die Taktzeiten gegenüber den herkömmlichen Verfahren wesentlich verkürzt werden, schwere Pressen und entsprechend ausgelegte beheizbare Einfach- oder Mehrfachpreßformen verzichtbar sind und daß eine gleichmäßigere Konsistenz und damit eine Qualitätsverbesserung der abgepreßten Bauteile erreicht wird.

Fig.1

EP 0 482 486 A2

Die Erfindung betrifft ein Verfahren zur Herstellung von Blattfedern und Achslenkern aus faserverstärktem Kunststoff, wobei aus mit hitzehärtbaren Harzen imprägnierten, hochfesten Fasern, wie Glasfasern und/oder Kohlenstoffasern gefertigte Vorformlinge vorgesehen sind, in die gegebenenfalls erforderliche Augen integriert sind.

Bei Verfahren der o.g. Art zur Herstellung von Blattfedern und Achslenkern aus faserverstärktem Kunststoff werden durch Aufeinanderschichten oder Wickeln von Bändern aus hochfesten Fasern, die mit hitzehärtbaren Harzen getränkt sind, Schichtkörper (Vorformlinge) gefertigt, die dann, in Preßformen eingelegt, unter Druck und bei erhöhter Temperatur von beispielsweise 150° C unter Aushärtung der Matrixharze zu Blattfedern bzw. Lenkern geformt werden. Je nach Harzsystem und Dicke des Vorformlings dauert ein Preßzyklus etwa 45 bis 60 Minuten.

Diese langen Zykluszeiten schränken die Produktivität in erheblichem Maße ein, so daß Mehrfachformen entwickelt wurden (EP-PS 0 061 273), mit deren Hilfe in einem Preßzyklus zehn und mehr (zusammenhängende) Vorformlinge gepreßt werden können. Dafür müssen allerdings neben schweren Pressen große, beheizbare Preßformen zur Verfügung stehen, die relativ teuer und unflexibel sind.

Außerdem erweist sich der Einsatz solcher Mehrfachformen nur bei Großserien wirtschaftlich, da bereits bei kleinsten Änderungen der Feder- bzw. Lenkergeometrie kostenaufwendige Nacharbeiten erforderlich werden.

Weiterhin hat sich gezeigt, daß den bekannten Verfahren, bei denen das Pressen der Vorformlinge unter gleichzeitiger Wärmezufuhr erfolgt, der Nachteil ungleichmäßiger Faser-Harzverteilungen anhaftet.

Die bei Raumtemperatur hochviskosen Harze verlieren an Stellen hoher Wärmezufuhr, also in den randnahen Bereichen, zuerst an Zähigkeit und beginnen zu fließen; der Zähigkeitsabfall setzt sich mit weiterer Wärmezufuhr zum Kern des Preßkörpers fort. Dabei strömt Harz an den Schließkanten der Preßform bzw. aus in der Preßform angebrachten Drainagesystemen aus.

Lokale Harzströme beeinflussen dabei sowohl die Position als auch die Orientierung der Fasern, und Harzanreicherungen führen ebenso wie Harzverarmungen (Totpressen) zum vorzeitigen Versagen des Bauteiles.

Entsprechend dem Wärmefluß vom Rand zum Kern des Preßkörpers erfolgt auch der Gelierprozeß der Harze. Dabei frei werdende Reaktionswärme überlagert sich dem von außen herangeführten Wärmefluß, so daß die randnahen Zonen schneller aushärten als die kernnahen, die dünneren Querschnitte schneller als die dickeren. Haben sich feste Randschichten gebildet, bevor der volle Preßweg zurückgelegt worden ist, dann wird einerseits die geforderte Bauteilgeometrie nicht erreicht, andererseits können in den bereits ausgehärteten Flanken der Preßkörper Schubrisse auftreten.

Der Erfindung liegt deshalb die Aufgabe zugrunde, ein Verfahren der oben genannten Art anzugeben, wobei die Endform der Blattfedern und Achslenker bei Temperaturen erreicht wird, die die Viskosität der Harze nur geringfügig vermindern, und die Wärmezufuhr zwecks Aushärtung der Harze im Anschluß an den Formgebungsvorgang erfolgt.

Diese Aufgabe wird erfindungsgemäß dadurch gelöst, daß der Vorformling nach Einlegen in eine Preßform in einem 2-stufigen Arbeitsgang auf seine Endform gebracht wird, wobei die Preßform nach Aufsetzen einer Abpreßleiste unter Druck geschlossen wird, in der 1. Stufe die geschlossene Preßform mit Vorformling unter Aufrechterhaltung des aufgebrachten Schließdruckes auf Abpreßtemperatur erwärmt wird und in der 2. Stufe nach Erreichen der Abpreßtemperatur der volle Preßdruck aufgebracht wird, die mit dem Preßdruck beaufschlagte Preßform auf Aushärtetemperatur erwärmt wird, wobei der Vorformling sich auf seine Sollmaße verdichtet und daß nach dem Aushärten der abgepreßte Rohling der Preßform entnommen und getempert wird.

Vorteilhaft ist es, wenn die Preßform vor Einbringen des Vorformlings vorgewärmt ist.

Eine Ausbildung der Erfindung besteht darin, daß Schließdruck und Preßdruck mittels Schraubenfedern während des Erwärmens auf Abpreß- und Aushärtetemperatur und zugehöriger in Stufen einstellbarer Arretierung aufrechterhalten wird.

Des weiteren beinhaltet der erfindungsgemäße Gedanke den Vorteil, das Aushärten in einem Durchlaufofen mit verschiedenen Temperaturzonen ablaufen zu lassen.

Die mit der Erfindung erzielten Vorteile bestehen insbesondere darin, daß durch das erfindungsgemäße Trennen von Pressen und Aushärten und eine Vielzahl von Preßformen einfachster Bauart eine Verkürzung der Taktzeiten erreicht wird. Dadurch werden die Investitions-, Werkzeug- und Handhabungskosten gesenkt. Außerdem wird eine gleichmäßigere Konsistenz der abgepreßten Bauteile erreicht, eine schalenartige Aushärtung ausgeschlossen und damit eine Qualitätsverbesserung erzielt.

Ausführungsbeispiele der Erfindung sind in den Zeichnungen dargestellt und werden nachfolgend näher beschrieben.

Es zeigen

Fig. 1    den erfindungsgemäßen Verfahrensablauf zur Herstellung einer Blattfeder in schematischer Darstellung,

Fig. 2 eine mit Druck beaufschlagte Abpreßform zur Herstellung eines Achslenkers und

Fig. 3 ein schematisches Diagramm des
Temperatur- und Druckverlaufes während eines Abpreßzyklus.

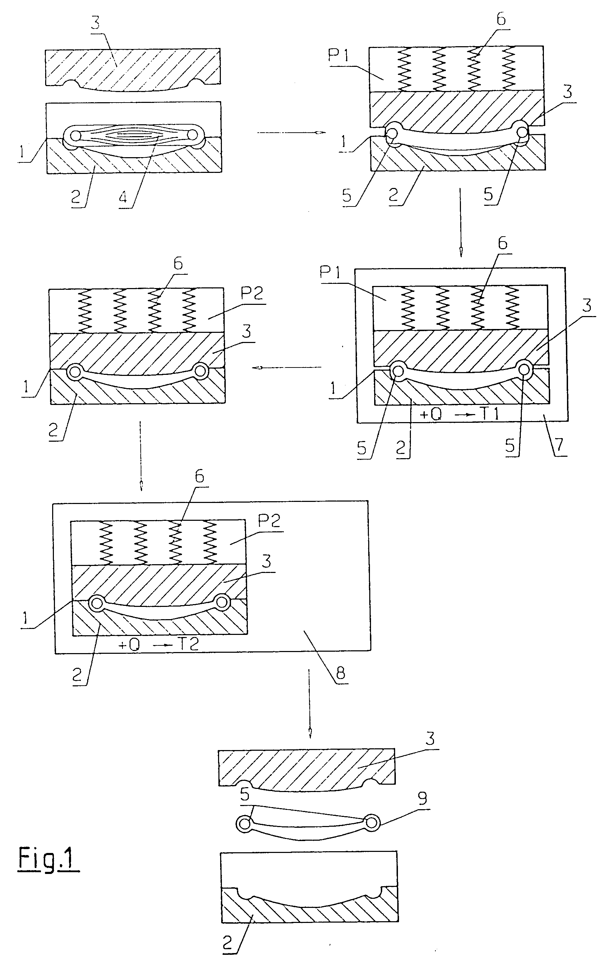

Das erfindungsgemäße Verfahren wird an Hand
von Fig. 1 für die Herstellung einer Kunststoff-
Blattfeder, bei der an beiden Enden Federaugen 5
mit integriert sind, erläutert.

Der durch Aufeinanderschichten oder Wickeln
von Bändern aus hochfesten, mit Harzen getränkten Fasern in bekannter Weise hergestellte Vorformling 4 wird in eine auf 90° C vorerwärmte
Preßform 1, bestehend aus zwei Formhälften, der
unteren Matrize 2 und der oberen als Abpreßleiste
3 ausgebildeten Patrize eingelegt und positioniert.
Die einander zugeordneten Preßflächen der Formhälften 2, 3 bestimmen die Geometrie der Blattfeder.

Nach Einbringen des Vorformlings 4 in die
Preßform 1 wird die Abpreßleiste 3 aufgesetzt und
die Preßform 1 in einer 1. Preßstation unter Aufbringen eines Drucks (Schließdruck) von $p_1$ = 20
bis 50 bar auf die Abpreßleiste 3 geschlossen. Es
hat sich als zweckmäßig erwiesen, den Schließdruck $p_1$ nach Einrasten einer Arretierung mit Hilfe
von Federelementen 6 aufrechtzuerhalten, so daß
die Verweilzeit in der 1. Preßstation weniger als 1
Minute beträgt und der aufgebrachte Schließdruck
$p_1$ während der nachfolgenden Erwärmung in einem Durchlaufofen 7 auf eine versuchstechnisch
ermittelte Abpreßtemperatur $T_1$ von ca. 120° Celsius nur geringfügig infolge des Austritts von aufgeschmolzenem Harz abfällt. Die Abpreßtemperatur
$T_1$ ist so gewählt, daß eine optimale Harzviskosität
erreicht wird und bei der Herstellung der Vorformlinge 4 eingebrachte Luft entweichen kann.

Erfindungsgemäß wird der volle Preßdruck $p_2$,
der zum Formen der Feder erforderlich ist, erst
nach Erreichen der Abpreßtemperatur $T_1$ aufgebracht, weil während des Erwärmens auf Abpreßtemperatur $T_1$ kein gleichmäßiges Abpressen des
Laminats über die gesamte Dicke des Bauteiles
erfolgen kann. Die äußeren Lagen werden schneller
erwärmt, was zum Aufschmelzen der Harze in diesem Bereich führt. Somit würde dieser Bereich
länger und damit auch stärker abgepreßt als die
sich später erwärmenden Innenlagen. Deshalb ist
nach der Erfindung vorgesehen, die Preßform 1
zunächst bei geringer Wärmezufuhr auf die Abpreßtemperatur $T_1$ aufzuheizen, um eine gleichmäßige Erwärmung des gesamten Laminats und damit
eine über die Dicke konstante Laminatqualität zu
gewährleisten.

Nach Erreichen der Abpreßtemperatur $T_1$ wird
die Preßform 1 dem Durchlaufofen 7 entnommen
und der Sollwert des Preßdruckes $p_2$ von 50 bis 60 bar in einer 2. Preßstation aufgebracht, der in gleicher Weise wie zuvor der Schließdruck $p_1$ über die
Federelemente 6 mit entsprechender Arretierung
während des Aufheizens und Haltens auf Aushärtetemperatur $T_2$ von 150 bis 160° Celsius je nach
Harzsystem nahezu konstant gehalten wird.

Das Aufheizen der Preßform 1 auf Aushärtetemperatur $T_2$ der Harze erfolgt vorteilhaft in einem
Durchlaufofen 8 mit verschiedenen Temperaturzonen, um die beim Aushärten freiwerdende Reaktionswärme zu kompensieren.

Nach dem Aushärten der Harze wird die Preßform 1 aus dem Ofen 8 geführt, geöffnet und der
ausgehärtete Blattfeder-Rohling 9 noch heiß entnommen und zur Vermeidung von Abkühlungsspannungen getempert.

Die noch heiße Preßform 1 wird unmittelbar
nach der Entnahme des Rohlings 9 einem erneuten
Preßzyklus zugeführt. Es hat sich vorteilhaft auf die
Taktzeiten ausgewirkt, wenn der Vorformling 4 in
eine bereits auf $T_0$ erwärmte Preßform 1 eingelegt
wird und die Preßformen 1 aus Werkstoffen mit
guter Wärmeleitzahl hergestellt sind. Außerdem
wird durch den sofortigen Wiedereinsatz der heißen
Preßform 1 die Zahl der im Umlauf befindlichen
Preßformen 1 möglichst niedrig gehalten.

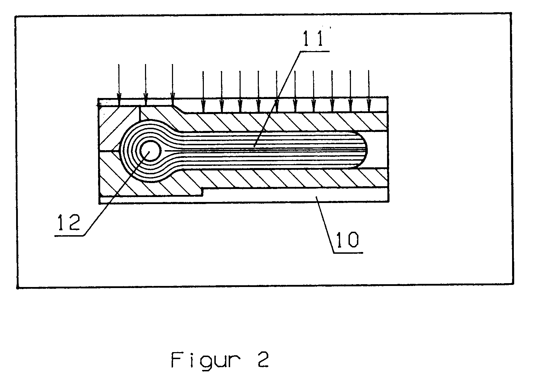

Durch das erfindungsgemäße Verfahren werden Taktzeiten von etwa 5 Minuten erzielt, wobei
etwa 20 Preßformen 1 im Umlauf sind. Als weiteres
Anwendungsbeispiel für das erfindungsgemäße
Verfahren ist in Fig. 2 die mit Druck beaufschlagte
Preßform 10 zur Herstellung eines Achslenkers 11
dargestellt. Der Achslenker 11 besteht im wesentlichen aus einem geraden, rechteckigen Körper oder
einem solchen mit sich über die Länge parabelförmig verändernder Dicke, an dessen einem Ende
ein Lenkerauge 12 zur Aufnahme eines Lagers
integriert ist.

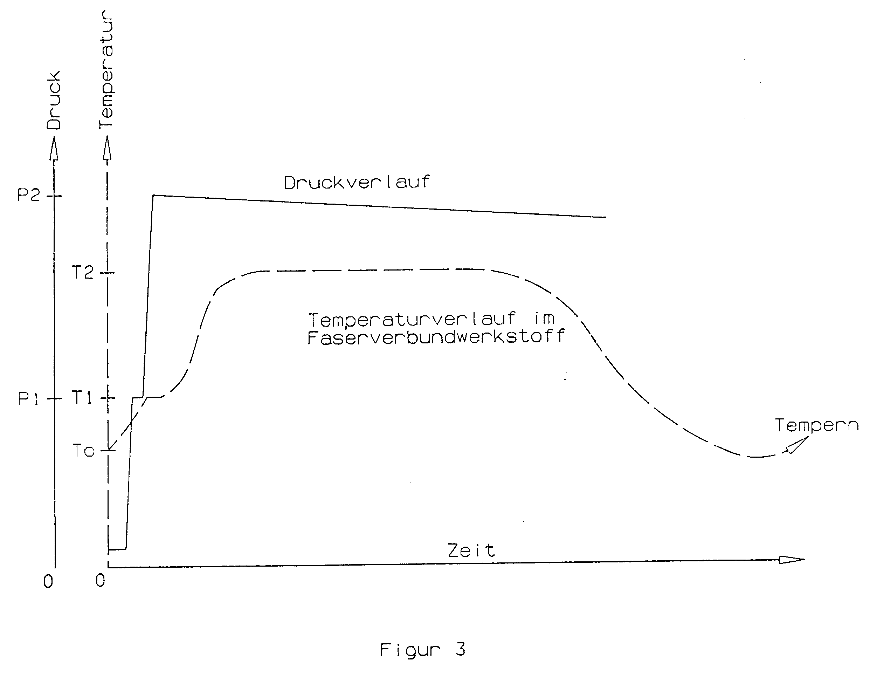

In Fig. 3 sind der Temperatur- und Druckverlauf während eines nach dem erfindungsgemäßen
Verfahren durchgeführten Preßzyklus für die Herstellung einer Kunststoff-Blattfeder bzw. Achslenkers dargestellt. Die Taktzeit ist vor allem abhängig
von der Dicke des Laminates und der Aushärtezeit
der Harze.

**Patentansprüche**

1. Verfahren zur Herstellung von Blattfedern und
Achslenkern aus faserverstärktem Kunststoff,
wobei aus mit hitzehärtbaren Harzen imprägnierten, hochfesten Fasern, wie Glasfasern
und/oder Kohlenstoffasern gefertigte Vorformlinge vorgesehen sind, in die gegebenenfalls
erforderliche Augen integriert sind, dadurch
**gekennzeichnet**, daß der Vorformling nach
Einlegen in eine Preßform in einem 2-stufigen
Arbeitsgang auf seine Endform gebracht wird, wobei die Preßform nach Aufsetzen einer Abpreßleiste unter Druck geschlossen wird, in der 1. Stufe die geschlossene Preßform mit Vorformling unter Aufrechterhaltung des aufgebrachten Schließdruckes auf Abpreßtemperatur erwärmt wird und in der 2. Stufe nach Erreichen der Abpreßtemperatur der volle Preßdruck aufgebracht wird, die mit dem Preßdruck beaufschlagte Preßform auf Aushärtetemperatur erwärmt wird, wobei der Vorformling sich auf seine Sollmaße verdichtet und daß nach dem Aushärten der abgepreßte Rohling der Preßform entnommen und getempert wird.

2.  Verfahren nach Anspruch 1, dadurch **gekennzeichnet**, daß die Preßform vor Einbringen des Vorformlings vorgewärmt ist.

3.  Verfahren nach Anspruch 1, dadurch **gekennzeichnet**, daß Schließdruck und Preßdruck mittels Schraubenfedern während des Erwärmens auf Abpreß- und Aushärtetemperatur und zugehöriger in Stufen einstellbarer Arretierung aufrechterhalten wird.

4.  Verfahren nach Anspruch 1, dadurch **gekennzeichnet**, daß das Aushärten in einem Durchlaufofen mit verschiedenen Temperaturzonen erfolgt.

Fig.1

Figur 2

Figur 3